(19) Europäisches Patentamt
European Patent Office
Office européen des brevets

(11) Veröffentlichungsnummer: **0 383 005 B1**

(12) # EUROPÄISCHE PATENTSCHRIFT

(45) Veröffentlichungstag der Patentschrift: **19.04.95**

(21) Anmeldenummer: **90100141.2**

(22) Anmeldetag: **04.01.90**

(51) Int. Cl.$^{6}$: **A01N 31/02**, A01N 31/14, A01N 31/08, A01N 37/10, A01N 43/50, A01N 43/52, A01N 43/78, A01N 47/28, A01N 47/44

(54) **Konservierungsmittel für Systeme oder Produkte mit einer wässrigen Phase.**

(30) Priorität: **11.02.89 DE 3904099**

(43) Veröffentlichungstag der Anmeldung:
**22.08.90 Patentblatt 90/34**

(45) Bekanntmachung des Hinweises auf die Patenterteilung:
**19.04.95 Patentblatt 95/16**

(84) Benannte Vertragsstaaten:
**AT BE CH DK ES FR GB GR IT LI LU NL SE**

(56) Entgegenhaltungen:
**EP-A- 0 147 222**
**EP-A- 0 147 223**
**DE-A- 1 642 056**
**DE-A- 1 642 057**

(73) Patentinhaber: **SCHÜLKE & MAYR GMBH**

**D-22840 Norderstedt (DE)**

(72) Erfinder: **Diehl, Karl-Heinz**
**Buschberger Weg 47**
**D-2000 Norderstedt (DE)**
Erfinder: **Oltmanns, Peter, Dr.**
**Lutterothstrasse 85**
**D-2000 Hamburg 20 (DE)**

(74) Vertreter: **UEXKÜLL & STOLBERG Patentanwälte**
**Beselerstrasse 4**
**D-22607 Hamburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die Erfindung betrifft ein Konservierungsmittel für Systeme oder Produkte mit einer wäßrigen Phase, wie beispielsweise Farben, Lacke, Klebstoffe oder wäßrige Emulsionen wie Bohrölemulsionen, wie Kühlwasserkreisläufe, beispielsweise bei Klimaanlagen sowie für andere zu konservierende Produkte einschließlich solcher auf dem Gebiet der Wasch- und Reinigungsmittel wie Geschirrspülmittel.

Produkte mit einer wäßrigen Phase können durch mikrobielle Einflüsse zu Verfärbungen, Gasbildung, Konsistenzänderung oder Geruchsbildung neigen, insbesondere wenn die Produkte biologisch abbaubare Stoffe, wie Emulgatoren oder Schutzkolloide enthalten, die einen geeigneten Nährboden für Bakterien bilden.

Die Verwendung von hochchlorierten Phenolen oder organischen Quecksilberverbindungen in Konservierungsmitteln oder solche auf Basis von Formaldehyd werden heutzutage wegen der schlechten Umweltverträglichkeit und Humantoxizität kaum noch eingesetzt. Das allgemeine Bestreben bei der Entwicklung neuer Konservierungsmittel ist eine Verringerung des Einsatzes von chemischen Stoffen unter Beibehaltung der gleichen antimikrobiellen Wirkung, so daß dem Auffinden neuer synergistischer Wirkstoffkombinationen auch auf Basis bereits bekannter antimikrobieller Wirkstoffe besondere Bedeutung zukommen.

Gemäß EP 147 222-A2 und EP 147 223-A2 hat man tert.-Butylhydroperoxid (TBHP), dessen biostatische Eigenschaft alleine als Konservierungsmittel nicht ausreicht, mit Kohlenwasserstoffen wie Xylol, Cresol, Phenylphenol und alkylierten Phenolen bzw. mit Aldehyden, Heterozyklen oder quaternären Verbindungen zur Konservierung von Treibstoffen, Kühlschmierstoffen oder zusammen mit einem Fungizid als Holzkonservierungsmittel eingesetzt. Diese Mischungen entsprechen jedoch nicht mehr den heutigen Anforderungen in ökologischer Hinsicht.

Ferner ist es aus P. Gilbert et al., Mikrobios 19, 1977, S. 125 bis 141 und aus den DE-OS'en 16 42 056 und 16 42 057 bekannt, daß Phenylglykolether antimikrobielle Eigenschaften besitzen und die Wirksamkeit anderer Desinfektionsmittel synergistisch steigern können.

Die Erfindung hat sich die Aufgabe gestellt, ein neues Konservierungsmittel auf Basis eines synergistisch wirkenden Mehr-Komponenten-Systems für Produkte mit einer wäßrigen Phase vorzuschlagen, welches mit geringeren Mengen an Wirkstoffen auskommt und auch bei niederer Einsatzkonzentration ein breites Wirkungsspektrum zeigt.

Zur Lösung dieser Aufgabe wird ein Konservierungsmittel vorgeschlagen, welches ein 2-Komponentensystem aus tert.-Butylhydroperoxid und Monophenylglykolethern enthält, wie es gemäß Hauptanspruch definiert ist.

Überraschenderweise hat sich gezeigt, daß die Kombination von TBHP mit einem Monophenylglykolether eine ausgezeichnete konservierende Wirkung für Produkte oder Systeme mit einer wäßrigen Phase besitzt. Dieses ist umso erstaunlicher, da der Monophenylglykolether, wie beispielsweise 2-Phenoxyethanol oder Phenoxypropanol, die als Lösungsmittel für verschiedene Einsatzgebiete bekannt sind, selber in einem akzeptablen Konzentrationsbereich keine ausreichende antimikrobielle Wirksamkeit zeigen. Konzentrationsbereich keine ausreichende antimikrobielle Wirksamkeit zeigen.

Die erfindungsgemäßen Konzentrate enthalten außer Verdünnungsmitteln und gegebenenfalls üblichen Zusatzstoffen neben dem tert.Butylhydroperoxyd (TBHP) als Komponente 1 ein oder mehrere Monophenylglykolether als Komponente 2 der allgemeinen Formel

I 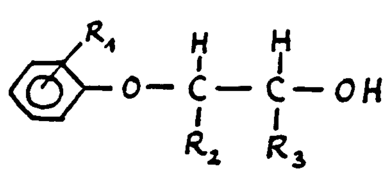

II 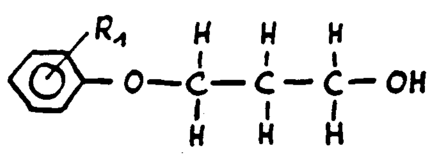

in der $R_1$ ein Wasserstoffatom oder ein n-Alkyl mit 1 bis 3 Kohlenstoffatomen und $R_2$ und $R_3$ ein Wasserstoffatom oder eine Methylgruppe bedeuten.

Besonders überraschend ist die Eigenschaft des erfindungsgemäß aus 2-Komponenten bestehenden Konservierungsmittels, daß es in Kombination mit an sich bekannten antimikrobiellen Wirkstoffen als 3. Komponente, nämlich mit bekannten Bioziden und auch algiziden oder fungiziden Wirkstoffen eine erhebliche Wirkungssteigerung bewirkt.

Als derartige Biozide kommen an sich bekannte Wirkstoffe in Betracht, ausgenommen jedoch stark oxidationsempfindliche Substanzen wie z.B. Benzisothiazolon, welches in Gegenwart von Peroxiden zu dem unwirksamen Saccharin oxidiert wird. Das Biozid wird vorzugsweise aus den folgenden Gruppen ausgewählt:

1) heterocyclische Verbindungen, wie z.B. Isothiazolinone, Benzothiazole, Imidazole, Benzimidazole sowie Derivate dieser Verbindungen

2) weitere algizide oder fungizide Wirkstoffe, wie z.B. Guanidin, Phthalimid oder Harnstoff-Derivate

Zur ersten Gruppe zählen z.B. folgende Wirkstoffe:
2-(Thiocyanomethylthio)-benzthiazol
2-(4-Thiazolyl)-1H-benzimidazol
1-Butyl-(carbamoyl)-2-benzimidazol-carbaminsäuremethylester
N-(n-Propyl)-N-(2,4,6-trichlorphenoxyethyl)-N'-imidazolylharnstoff
2-n-Octyl-4-isothiazolin-3-on
2-Methyl-4-isothiazolin-3-on
5-Chlor-2-methyl-4-isothiazolin-3-on
2-Cyclohexyl-4-isothiazolin-3-on
2-Dodecyl-4-isothiazolin-3-on
2-Benzyl-4-isothiazolin-3-on

Beispiele für die in der zweiten Gruppe genannten Wirkstoffe sind:
N-Trichlormethylthio-phthalimid
N-Dichlorfluormethylthio-N',N'-dimethyl-N-phenylschwefelsäurediamid
Dodecylguanidinacetat
N-(n-Propyl)-N-(2,4,6-trichlorphenxoyethyl)-N'-imidazolylharnstoff
3-(3,4-Dichlorphenyl)-1,1-dimethylharnstoff

Der TBHP-Gehalt im formulierten Konservierungsmittel soll aus Gründen der Handhabbarkeit maximal 50 % betragen. In der Regel liegt der TBHP-Gehalt bei 20 - 30 %; so lassen sich Konzentrate erhalten, die in zur Konservierung üblichen Einsatzkonzentrationen (0,1 - 0,5 %) gut wirksam sind. Der Gehalt an Biozid (Komponente 3) beträgt mindestens 0,1 % und kann den spezifischen mikrobiologischen Anforderungen angepaßt werden.

Wird beispielsweise eine extrem starke Pilzwirksamkeit gefordert, so kann z.B. 2-(Thiocyanomethylthio)-benzthiazol oder 2-(4-Thiazolyl)-1H- benzimidazol als Komponente 3 zur Herstellung der synergistisch wirkenden Formulierungen mit Gehalten bis zu 20 % eingesetzt werden. Aus Löslichkeitsaspekten der Komponente 3 in polaren Lösungsmitteln empfiehlt es sich, wässrige Emulsionen oder Dispersionen unter Zuhilfenahme geeigneter Emulgatoren bzw. Dispergier-Hilfsmitteln herzustellen.

Im folgenden sind einige Beispiele der erfindungsgemässen Konservierungsmittel-Konzentrate aufgeführt. TBHP kann in Form von handelsüblichen 70 oder 80 %igen Qualitäten eingesetzt werden. Die Gew. %-Angaben beziehen sich auf den Gehalt an Aktivstoff.

| | Gew.-% | im Konservierungsbelastungstest erreichte Impfzyklen |
|---|---|---|
| **Beispiel 1** | | |
| TBHP | 20 | 4 |
| Phenoxypropanol | 20 | |
| Butyldiglykol | ad 100 | |
| **Beispiel 2** | | |
| TBHP | 25 | 6 |
| 2-(Thiocyanomethylthio)-benzthiazol | 3 | |
| Phenoxypropanol | 15 | |
| Triethylenglykol | ad 100 | |
| **Beispiel 3** | | |
| TBHP | 18 | 5 |
| 2-n-Octyl-4-isothiazolin-3-on | 3 | |
| Phenoxypropanol | 15 | |
| 1,2-Propylenglykol | ad 100 | |
| **Beispiel 4** | | |
| TBHP | 10 | 5 |
| 2-(Thiazolyl)-1H-benzimidazol | 5 | |
| Phenoxypropanol | 20 | |
| Butyldiglykol | ad 100 | |

| | Gew.-% | im Konservierungsbelastungstest erreichte Impfzyklen |
|---|---|---|
| **Beispiel 5** | | |
| TBHP | 30 | 6 |
| 2-(Thiocyanomethylthio)-benzthiazol | 3 | |
| Phenoxypropanol | 10 | |
| Butyldiglykol | ad 100 | |
| **Beispiel 6** | | |
| TBHP | 30 | 7 |
| 2-n-Octyl-4-isothiazolin-3-on | 5 | |
| Phenoxypropanol | 15 | |
| 1,2-Propylenglykol | ad 100 | |
| **Beispiel 7** | | |
| TBHP | 40 | 5 |
| 2-n-Octyl-4-isothiazolin-3-on | 1 | |
| Phenoxypropanol | 5 | |
| 1,2-Propylenglykol | ad 100 | |
| **Beispiel 8** | | |
| TBHP | 10 | 6 |
| 2-(Thiazolyl)-1H-benzimidazol | 3 | |
| Phenoxypropanol | 25 | |
| Triethylenglykol | ad 100 | |

| | Gew.-% | im Konservierungsbelastungstest erreichte Impfzyklen |
|---|---|---|
| **Beispiel 9** | | |
| TBHP | 25 | 6 |
| p-Hydroxybenzoesäurebutylester | 5 | |
| Phenoxypropanol | 10 | |
| Natriumdiphenyloxiddisulfonat | 10 | |
| VE-Wasser | ad 100 | |
| **Beispiel 10** | | |
| TBHP | 20 | 7 |
| Dodecylguanidinacetat | 10 | |
| Phenoxypropanol | 10 | |
| Natriumdiphenyloxiddisulfonat | 10 | |
| VE-Wasser | ad 100 | |
| **Beispiel 11** | | |
| TBHP | 20 | 6 |
| 5-Chlor-2-methyl-4-isothiazolin-3-on/ 2-Methyl-4-isothiazolin-3-on im Verhältnis 3 : 1 | 3 | |
| Phenoxyethanol | 20 | |
| Butyldiglykol | ad 100 | |
| **Beispiel 12** | | |
| TBHP | 25 | 6 |
| 5-Chlor-2-methyl-4-isothiazolin-3-on/ 2-Methyl-4-isothiazolin-3-on im Verhältnis 3 : 1 | 5 | |
| Phenoxyethanol | 15 | |
| Natriumdiphenyloxiddisulfonat | 5 | |
| VE-Wasser | ad 100 | |

Die erfindungsgemäßen Formulierungen können einfach durch Zusammengeben der einzelnen Wirkstoffe in einem geeigneten Lösungsmittel erhalten werden. Als Lösungsmittel kommen je nach eingesetztem Bakterizid hauptsächlich Glykole, wie Propylenglykol, Dipropylenglykol, Triethylenglykol oder Glykolether, wie Butyldiglykol in Betracht. Daneben besteht die Möglichkeit, unter Zusatz einer oberflächenaktiven Substanz eines anionischen, kationischen oder nichtionogenen Tensides stabile wässrige Emulsionen herzustellen. Die Komposition kann TBHP und das Biozid in jedem verträglichen Verhältnis zueinander enthalten. Je nach Verwendungsart kann dieses 50 : 1 bis 1 : 1 betragen, vorzugsweise 30 : 1 bis 10 : 1.

Der oder die Monophenylether können im Verhältnis 10 : 1 bis 1 : 10 zu TBHP eingesetzt werden, vorzugsweise im Verhältnis von 3 : 1 bis 1 : 3. Die Verhältnisse TBHP : Biozid richten sich im wesentlichen nach der Löslichkeit im gewählten Lösungsmittel bzw. Tensid-System und nach dem für das spezielle Einsatzgebiet gewünschten Wirkungsspektrum.

Die synergistische Wirksamkeit der Formulierungen wird durch die Ergebnisse eines Konservierungsbelastungstestes demonstriert. Das Testverfahren wird im folgenden beschrieben.

Die zu testenden Formulierungen werden jeweils 0,1 %ig in 50 g-Muster einer Styrolacrylat-Dispersionsfarbe (Rezeptur siehe Anhang) eingearbeitet. Zwei Tage nach Einarbeitung der Konservierungsmittel werden die Testansätze erstmalig auf Caseinpepton-Sojamehlpepton-Agar ausgestrichen und mit 0,2 ml einer Impflösung infiziert. Die Impflösung besteht aus einer homogenen Suspension folgender Keime:

1) Escherichia coli
2) Pseudomonas aeruginosa
3) Micrococcus luteus
4) Klebsiella pneumoniae
5) Hefe
6) Aspergillus niger

Der Titer der Impflösung beträgt mindestens $10^8$ Keime/ml.

Die Testansätze werden in der Folge einmal wöchentlich beimpft und einmal pro Woche auf Agar-Platten ausgestrichen, wobei der erste Ausstrich unmittelbar vor der Neubeimpfung erfolgt. Die Beurteilung des mikrobiellen Wachstums der Ausstriche erfolgt nach einer dreitägigen Inkubation bei 22° C. Negative Ausstriche werden sicherheitshalber weitere zwei Tage beobachtet und nochmals beurteilt. Die Beurteilung der Konservierungswirkung des getesteten Konservierungsmittels erfolgt anhand des mikrobiellen Wachstums der Ausstriche. Ein Konservierungsmittel ist umso wirksamer, je länger der Zeitraum bis zum ersten Auftreten mikrobiellen Wachstums ist, d.h. je mehr Impfzyklen in diesem Zeitraum überstanden werden.

Nachfolgend sind die mikrobiologischen Ergebnisse einiger getesteter Formulierungen aufgeführt. Angegeben sind jeweils der Gehalt an Aktivstoff in den Dispersionsfarbe-Testansätzen sowie die erreichten bewuchsfreien Impfzyklen der Einzelwirkstoffe (siehe Tabelle 1) und der Wirkstoffkombinationen (siehe Tabelle 2).

Tabelle 1

| Konzentration [ppm] | Impfzyklen TBHP | Phenoxy-propanol | TCMTB | 2-n-Octyl-4-isothiazolin-3-on | Thiabendazol |
|---|---|---|---|---|---|
| 500 | 4 | 2 | 4 | 4 | 3 |
| 400 | 4 | 1 | 4 | 3 | 3 |
| 300 | 3 | 1 | 3 | 3 | 2 |
| 200 | 3 | - | 3 | 2 | 2 |
| 100 | 2 | - | 3 | 2 | 1 |
| 50 | 1 | - | 2 | 1 | |
| 30 | 1 | - | 2 | | |
| 10 | - | - | 1 | | |

**Legende:**
TBHP = Tertiärbutylhydroperoxyd
TCMTB = 2-(Thiocyanomethylthio)-benzthiazol
Thiabendazol = 2-(4-Thiazolyl)-1H-benzimidazol

**Tabelle 2**

Konzentration [ppm]

| | | | | | | | | | | | | | | | | | | |
|---|---|---|---|---|---|---|---|---|---|---|---|---|---|---|---|---|---|---|
| TBHP | 200 | 200 | 200 | 200 | 200 | 200 | 200 | 200 | 200 | 300 | 300 | 300 | 300 | 300 | 300 | 300 | 300 | 300 |
| Phenoxypropanol | 200 | 200 | 200 | 200 | 200 | 200 | 200 | 200 | 200 | 100 | 100 | 100 | 100 | 100 | 100 | 100 | 100 | 100 |
| TCMTB | 50 | 30 | 10 | | | | | | | 50 | 30 | 10 | | | | | | |
| 2-n-Octyl-4-isothiazolin-3-on | | | | 50 | 30 | 10 | | | | | | | 50 | 30 | 10 | | | |
| Thiabendazol | | | | | | | 50 | 30 | 10 | | | | | | | 50 | 30 | 10 |
| Impfzyklen | 7 | 6 | 5 | 6 | 5 | 5 | 6 | 5 | 5 | 7 | 6 | 5 | 6 | 6 | 5 | 6 | 5 | 5 |
| TBHP | 100 | 100 | 100 | 100 | 100 | 100 | 100 | 100 | 100 | 100 | 100 | 100 | 100 | 100 | 100 | 100 | 100 | 100 |
| Phenoxypropanol | 300 | 300 | 300 | 300 | 300 | 300 | 300 | 300 | 300 | 100 | 100 | 100 | 100 | 100 | 100 | | | |
| TCMTB | 50 | 30 | 10 | | | | | | | 50 | 30 | 10 | | | | | | |
| 2-n-Octyl-4-isothiazolin-3-on | | | | 50 | 30 | 10 | | | | | | | 50 | 30 | 10 | | | |
| Thiabendazol | | | | | | | 50 | 30 | 10 | | | | | | | 50 | 30 | 10 |
| Impfzyklen | 6 | 6 | 5 | 6 | 5 | 4 | 6 | 5 | 5 | 6 | 5 | 4 | 5 | 4 | 4 | 5 | 4 | 4 |

**Legende:**
TBHP = Tertiärbutylhydroperoxyd
TCMTB = 2-(Thiocyanomethylthio)-benzthiazol
Thiabendazol = 2-(4-Thiazolyl)-1H-benzimidazol

Aus den mikrobiologischen Ergebnissen wird die synergistische Wirksamkeit der getesteten Formulierungen klar ersichtlich.

Beispielsweise bewirkt eine Kombination von 200 ppm TBHP mit 200 ppm Phenoxypropanol und 50 ppm 2-(Thiocyanomethylthio)-benzthiazol Bewuchsfreiheit im Testprodukt über sieben Impfzyklen. Mit den Einzelwirkstoffen werden bei gleichen Konzentrationen maximal drei (TBHP oder Phenoxypropanol) Impfzyklen erreicht. Ein Ersatz des Gesamtwirkstoffanteils (450 ppm) durch einen der drei Einzelwirkstoffe bewirkt

Keimfreiheit über maximal vier Impfzyklen. Somit kann von einem tatsächlich existierenden synergistischen Effekt gesprochen werden.

Vergleichbare Ergebnisse werden mit den übrigen getesteten Formulierungen erhalten.

Beispiel 13

Es wurde eine Styrolacrylat-Innenfarbe der folgenden Zusammensetzung auf übliche Weise durch Rühren und Homogenisieren hergestellt:

| Bestandteile | Gew.% |
|---|---|
| Wasser | 23,352 |
| Natriumpolyphosphat | 0,008 |
| Natriumhydroxid | 0,03 |
| Ammoniumpolyacrylat | 0,16 |
| Entschäumer | 0,30 |
| Calciumcarbonat | 34,10 |
| Titandioxid | 4,90 |
| Kreide | 19,50 |
| Talkum | 4,90 |
| Testbenzin (Flammpunkt ca. 37 ° C) | 1,50 |
| Hochsiedender Esteralkohol | 1,0 |
| Hydroxyethylcellulose | 0,30 |
| Acrylestercopolymerisat | 0,80 |
| Thixotropiemittel auf Polyurethanbasis | 0,15 |

Zu dieser Farbe werden noch etwa 10 Gew.% Wasser und, bezogen auf die Gesamtzusanmensetzung 0,3 Gew.% des Konservierungsmittels gemäß Beispiel 2 zugesetzt und gründlich homogenisiert. Die erhaltene Farbe zeigte eine wie oben erwähnt ausgezeichnete Beständigkeit gegen Bakterienbefall.

**Patentansprüche**

**1.** Konservierungsmittel für Produkte oder Systeme mit einer wäßrigen Phase, **dadurch gekennzeichnet,** daß es ein 2-Komponentengemisch aus

a) 12 bis 60 Gew.% tert.-Butylhydroperoxid und

b) 3 bis 50 Gew.% eines oder mehrerer Monophenylglykolether der folgenden allgemeinen Formel I oder II enthält:

I

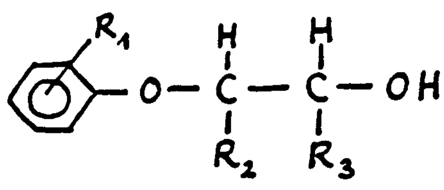

II

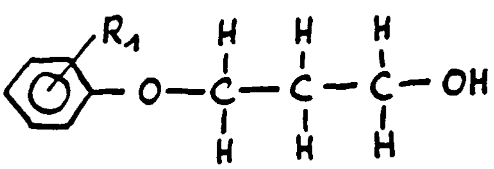

in der $R_1$ ein Wasserstoffatom oder ein n-Alkyl oder iso-Alkyl mit 1 bis 3 Kohlenstoffatomen und $R_2$ und $R_3$ ein Wasserstoffatom oder eine Methylgruppe bedeuten, sowie

c) 0 bis 85 Gew.% eines Verdünnungsmittels enthält.

**2.** Konservierungsmittel nach Anspruch 1, **dadurch gekennzeichnet**, daß es

a) 20 bis 31 Gew.% tert.-Butylhydroperoxid und
b) 5 bis 25 Gew.% des Monophenylglykolethers gemäß Formel I oder II enthält.

**3.** Konservierungsmittel nach Anspruch 1 oder 2, dadurch gekennzeichnet, daß es als weitere Komponente ein Biozid ausgewählt aus Isothiazolinonen, Benzothiazolen, Imidazolen, Benzimidazolen und/oder Derivaten dieser Verbindungen enthält.

**4.** Konservierungsmittel nach Anspruch 1 oder 2, dadurch gekennzeichnet, daß es als weitere Komponente ein Algizid oder Fungizid aus der Gruppe des Guanidins, Phthalimids und/oder Harnstoffderivate enthält.

**5.** Konservierungsmittel nach Anspruch 3 oder 4, dadurch gekennzeichnet, daß die Biozide, Algizide oder Fungizide in einer Menge von 2 bis 5 Gew.% vorhanden sind.

## Claims

**1.** Preservative for products or systems with an aqueous phase, characterized in that it contains a 2-component mixture consisting of
a) 12 to 60 wt.% tert.-butyl hydroperoxide and
b) 3 to 50 wt.% of one or more monophenyl glycol ethers of the following general formula I or II:

I 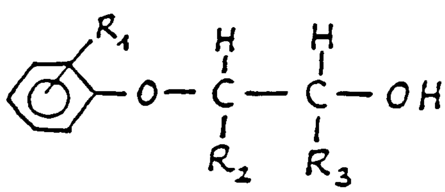

II 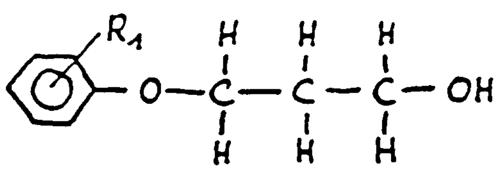

in which $R_1$ is a hydrogen atom or an n-alkyl or isoalkyl with 1 to 3 carbon atoms and $R_2$ and $R_3$ are a hydrogen atom or a methyl group, and
c) 0 to 85 wt.% of a diluting agent.

**2.** Preservative according to claim 1, characterized in that it contains
a) 20 to 31 wt.% tert.-butyl hydroperoxide and
b) 5 to 25 wt.% of the monophenyl glycol ether according to formula I or II.

**3.** Preservative according to claim 1 or 2, characterized in that it contains, as further component, a biocide selected from isothiazolinones, benzothiazoles, imidazoles, benzimidazoles and/or derivatives of these compounds.

**4.** Preservative according to claim 1 or 2, characterized in that it contains, as further component, an algicide or fungicide from the group of guanidine, phthalimides and/or urea derivatives.

**5.** Preservative according to claim 3 or 4, characterized in that the biocides, algicides or fungicides are present in a quantity from 2 to 5 wt.%.

## Revendications

**1.** Agent de conservation pour des produits ou systèmes en phase aqueuse, caractérisé en ce qu'il est formé d'un mélange bi-composant comprenant:

a) 12 à 60% en poids de tert-butyl-hydropéroxyde, et

b) 3 à 50% en poids d'un ou plusieurs monophényl-glycoléther(s) de formules générales I ou II:

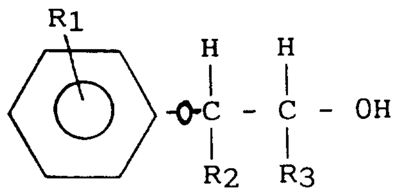

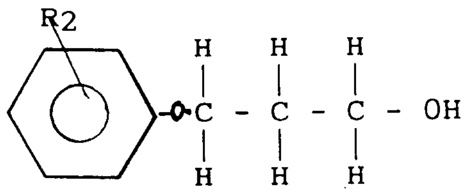

dans lesquelles:

$R_1$ représente un atome d'hydrogène ou un groupe n-alkyle ou iso-alkyle avec 1 à 3 atomes de carbone, et $R_2$ et $R_3$ représentent un atome d'hydrogène ou un groupe méthyle, ainsi que

c) 0 à 85% en poids d'un agent de dilution.

**2.** Agent de conservation selon la revendication 1, caractérisé en ce qu'il comprend:

a) 20 à 31% en poids de tert-butyl-hydropéroxyde, et

b) 5 à 25% en poids du monophényl-glycoléther de fo rmule I Ou II.

**3.** Agent de conservation selon la revendication 1 ou 2, caractérisé en ce qu'il comprend, en tant que composant supplémentaire, un agent biocide choisi dans le groupe consistant en: isothiazolinones, benzothiazoles, imidazoles, benzimidazoles et/ou des dérivés de ces composés.

**4.** Agent de conservation selon la revendication 1 ou 2, caractérisé en ce qu'il comprend, en tant que composant supplémentaire, un agent algicide ou un fongicide choisi dans le groupe consistant en guanidine, phtalimide et/ou dérivé d'urée.

**5.** Agent de conservation selon la revendication 3 ou 4,caractérisé en ce que l'agent biocide, algicide ou fongicide est présent en une quantité de 2 à 5% en poids.